# EUROPEAN PATENT APPLICATION

(11) **EP 4 586 339 A1**
(43) Date of publication of application: **16.07.2025**
(21) Application number: 23862788.9
(22) Date of filing: 12.07.2023
(51) Int. Cl.: H01M 4/58, C01G 21/16, H01M 4/02, H01M 4/136, H01M 4/36, H01M 10/05, H01M 10/36, H01M 10/44

(54) **FLUORIDE SHUTTLE SECONDARY BATTERY, AND METHOD FOR USING FLUORIDE SHUTTLE SECONDARY BATTERY**

(30) Priority: 06.09.2022 JP 2022141552
(71) Applicant: Panasonic Energy Co., Ltd., Osaka 570-8511 (JP)
(72) Inventor: HINOGAMI, Reiko, Kadoma-shi, Osaka 571-0057 (JP)
(74) Representative: Novagraaf International SA
(86) International application number: PCT/JP2023/025798
(87) International publication number: WO 2024/053244

(57) **Abstract**

A fluoride shuttle secondary battery (1) of the present disclosure is a fluoride shuttle secondary battery including: a positive electrode (2); a negative electrode (4); and an electrolyte layer (3) arranged between the positive electrode (2) and the negative electrode (4), wherein the fluoride shuttle secondary battery satisfies at least one selected from the group consisting of the following (A1) and (B1). (A1) The negative electrode (4) contains a first negative electrode active material and a second negative electrode active material having composition different from that of the first negative electrode active material, the first negative electrode active material is a first metal fluoride containing a metal M1, and the metal M1 has a melting point of 0°C or more and 250°C or less. (B1) The positive electrode (2) contains a first positive electrode active material and a second positive electrode active material having composition different from that of the first positive electrode active material, and the first positive electrode active material is a metal M2, which forms a metal fluoride represented by M2Fₓ and having a melting point of 0°C or more and 250°C or less, where "x" represents a valence of the M2.

## Description

### TECHNICAL FIELD

The present disclosure relates to a fluoride shuttle secondary battery and a method of using a fluoride shuttle secondary battery.

### BACKGROUND ART

A lithium ion secondary battery has been widespread as a secondary battery having a high energy density. In addition, a lithium ion solid-state battery using an incombustible and inorganic solid electrolyte has been proposed. Such lithium ion solid-state battery has high safety. Accordingly, the lithium ion solid-state battery has been widely researched and developed.

A fluoride shuttle secondary battery in which a fluoride ion (F⁻) moves has been proposed as a kind of battery using such solid electrolyte as described above. The fluoride shuttle secondary battery has a high theoretical energy density. An example of a fluoride shuttle secondary battery in which AlF₃ or LaF₃ is used as a negative electrode material has been reported. In Patent Literature 1, there is a disclosure of a fluoride shuttle secondary battery using aluminum fluoride as a negative electrode material. In Patent Literature 2, there is a disclosure of a fluoride shuttle secondary battery whose negative electrode contains a La-containing fluoride.

### CITATION LIST

### Patent Literature

Patent Literature 1: WO 2019/187943 A1
Patent Literature 2: JP 2017-84506 A

### SUMMARY OF INVENTION

### Technical Problem

The present disclosure provides a fluoride shuttle secondary battery increased in discharge capacity.

### Solution to Problem

A fluoride shuttle secondary battery of the present disclosure includes:
a positive electrode;
a negative electrode; and
an electrolyte layer arranged between the positive electrode and the negative electrode,
wherein the fluoride shuttle secondary battery satisfies at least one selected from the group consisting of the following (A1) and (B1):
   (A1) the negative electrode contains a first negative electrode active material and a second negative electrode active material having composition different from that of the first negative electrode active material,
      the first negative electrode active material is a first metal fluoride containing a metal M1, and
      the metal M1 has a melting point of 0°C or more and 250°C or less; and
   (B1) the positive electrode contains a first positive electrode active material and a second positive electrode active material having composition different from that of the first positive electrode active material, and
      the first positive electrode active material is a metal M2, which forms a metal fluoride represented by M2Fₓ and having a melting point of 0°C or more and 250°C or less,
      where "x" represents a valence of the M2.

### Advantageous Effects of Invention

The present disclosure provides a fluoride shuttle secondary battery increased in discharge capacity.

### BRIEF DESCRIPTION OF DRAWINGS

FIG. 1 is a sectional view for schematically illustrating a fluoride shuttle secondary battery according to an embodiment of the present disclosure.
FIG. 2 is a sectional view for schematically illustrating a modification of the fluoride shuttle secondary battery according to the embodiment of the present disclosure.
FIG. 3 is a graph showing the results of the charge-discharge test of the evaluation cell of Example 1 at 140°C.
FIG. 4A is a sectional SEM image of the evaluation cell of Example 1 before its charging and discharging.
FIG. 4B is a mapping image showing the distribution of Na in the image shown in FIG. 4A, the mapping image being obtained from the measurement result of SEM-EDX.
FIG. 5A is a sectional SEM image of the evaluation cell of Example 1 after the charging and the discharging.
FIG. 5B is a mapping image showing the distribution of Na in the image shown in FIG. 5A, the mapping image being obtained from the measurement result of the SEM-EDX.
FIG. 6 is a graph showing the results of the charge-discharge test of the evaluation cell of Comparative Example 1 at 140°C.
FIG. 7 is a graph showing the results of the charge-discharge test of the evaluation cell of Comparative Example 2 at 140°C.
FIG. 8 is a graph showing a charge-discharge result in the second cycle of the charge-discharge test of each of the evaluation cells of Example 1, Comparative Example 1, and Comparative Example 2 at 140°C.
FIG. 9 is a graph showing the results of the charge-discharge test of the evaluation cell of Example 1 at 90°C.
FIG. 10 is a graph showing the results of the charge-discharge test of the evaluation cell of Example 1 at 90°C after the cell has been operated for 2 cycles at 140°C.
FIG. 11 is a graph showing the results of the charge-discharge test of the evaluation cell of Example 2 at 140°C.
FIG. 12 is a graph showing the results of the charge-discharge test of the evaluation cell of Example 3 at 140°C.
FIG. 13 is a graph showing the results of the charge-discharge test of the evaluation cell of Comparative Example 3 at 140°C.
FIG. 14 is a graph showing the results of the charge-discharge test of the evaluation cell of Example 4 at 140°C.
FIG. 15 is a graph showing the results of the charge-discharge test of the evaluation cell of Comparative Example 4 at 140°C.

### DESCRIPTION OF EMBODIMENTS

### <Embodiment of the Present Disclosure>

A fluoride shuttle secondary battery according to an embodiment of the present disclosure is described in detail below with reference to the drawings.

### (First Embodiment)

A fluoride shuttle secondary battery is a battery that obtains an electromotive force as follows: a fluoride ion is shuttled in an electrolyte to advance a defluorination reaction and a fluorination reaction in each of its positive electrode and negative electrode.

A fluoride shuttle secondary battery according to an embodiment of the present disclosure includes: a positive electrode; a negative electrode; and an electrolyte layer arranged between the positive electrode and the negative electrode. The fluoride shuttle secondary battery satisfies at least one selected from the group consisting of the following (A1) and (B1).
(A1) The negative electrode contains a first negative electrode active material and a second negative electrode active material having composition different from that of the first negative electrode active material, the first negative electrode active material is a first metal fluoride containing a metal M1, and the metal M1 has a melting point of 0°C or more and 250°C or less.
(B1) The positive electrode contains a first positive electrode active material and a second positive electrode active material having composition different from that of the first positive electrode active material, and the first positive electrode active material is a metal M2, which forms a metal fluoride represented by M2Fₓ and having a melting point of 0°C or more and 250°C or less, where "x" represents a valence of the M2.

When the fluoride shuttle secondary battery according to the embodiment of the present disclosure satisfies the above-mentioned (A1), the negative electrode contains the first negative electrode active material and the second negative electrode active material having composition different from that of the first negative electrode active material. The first negative electrode active material is the first metal fluoride containing the metal M1 having a melting point of 0°C or more and 250°C or less. Accordingly, in the fluoride shuttle secondary battery according to the embodiment of the present disclosure, as a result of its charging, the first metal fluoride is defluorinated by the charging reaction of the negative electrode active materials to produce the metal M1, and the produced metal M1 may be melted. For example, when the battery operates in an environment at a temperature equal to or more than the melting point of the metal M1, the metal M1 produced from the first metal fluoride is melted by the charging. According to the foregoing, the molten metal M1 spreads around the negative electrode active materials, and hence satisfactory material transfer between the negative electrode active materials can be achieved. In addition, when the negative electrode includes a negative electrode active material layer containing the negative electrode active materials and a solid electrolyte, satisfactory material transfer between the negative electrode active materials and the solid electrolyte can also be achieved. Accordingly, the fluoride shuttle secondary battery according to the embodiment of the present disclosure can achieve an increased discharge capacity. The fluoride shuttle secondary battery according to the embodiment of the present disclosure can achieve an increased discharge capacity as compared to, for example, that of a battery using only the second negative electrode active material as a negative electrode active material. In addition, the utilization ratio of the negative electrode active materials and the cycle characteristic of the battery can be improved.

In the present disclosure, the term "utilization ratio" means the ratio of the actual specific capacity of an active material to the theoretical specific capacity of the active material. In the present disclosure, when the simple term "negative electrode active materials" is described, the negative electrode active materials include both of the first negative electrode active material and the second negative electrode active material. In the present disclosure, when the simple term "positive electrode active materials" is described, the positive electrode active materials include both of the first positive electrode active material and the second positive electrode active material.

When the fluoride shuttle secondary battery according to the embodiment of the present disclosure satisfies the above-mentioned (B1), the positive electrode contains the first positive electrode active material and the second positive electrode active material having composition different from that of the first positive electrode active material. The first positive electrode active material is the metal M2, which forms a metal fluoride represented by M2Fₓ and having a melting point of 0°C or more and 250°C or less. Accordingly, in the fluoride shuttle secondary battery according to the embodiment of the present disclosure, as a result of its charging, the metal fluoride represented by M2Fₓ may be melted in the positive electrode. For example, when the battery operates in an environment at a temperature equal to or more than the melting point of the M2Fₓ, the M2Fₓ produced from the metal M2 is melted by the charging. According to the foregoing, the molten M2Fₓ spreads around the positive electrode active materials, and hence satisfactory material transfer between the positive electrode active materials can be achieved. In addition, when the positive electrode includes a positive electrode active material layer containing the positive electrode active materials and a solid electrolyte, satisfactory material transfer between the positive electrode active materials and the solid electrolyte can also be achieved. Accordingly, the fluoride shuttle secondary battery according to the embodiment of the present disclosure can achieve an increased discharge capacity. The fluoride shuttle secondary battery according to the embodiment of the present disclosure can achieve an increased discharge capacity as compared to, for example, that of a battery using only the second positive electrode active material as a positive electrode active material. In addition, the utilization ratio of the positive electrode active materials and the cycle characteristic of the battery can be improved.

When the fluoride shuttle secondary battery according to the embodiment of the present disclosure satisfies the above-mentioned (A1), the metal M1 may be melted by the charging of the battery, and when the battery satisfies the above-mentioned (B1), the M2Fₓ may be melted by the charging of the battery. When the fluoride shuttle secondary battery according to the embodiment of the present disclosure satisfies the above-mentioned (A1), the metal M1 may be melted at the time of the charging, and when the battery satisfies the above-mentioned (B1), the M2Fₓ may be melted at the time of the charging. When the metal M1 produced from the first metal fluoride in the negative electrode is melted by the charging, the molten metal M1 spreads around the negative electrode active materials, and hence satisfactory material transfer between the negative electrode active materials can be achieved. In addition, when the negative electrode includes a negative electrode active material layer containing the negative electrode active materials and a solid electrolyte, satisfactory material transfer between the negative electrode active materials and the solid electrolyte can also be achieved. Thus, the first negative electrode active material and the second negative electrode active material can each achieve an increased specific capacity. When the M2Fₓ produced from the metal M2 in the positive electrode is melted by the charging, the molten M2Fₓ spreads around the positive electrode active materials, and hence satisfactory material transfer between the positive electrode active materials can be achieved. In addition, when the positive electrode includes a positive electrode active material layer containing the positive electrode active materials and a solid electrolyte, satisfactory material transfer between the positive electrode active materials and the solid electrolyte can also be achieved. Thus, the first positive electrode active material and the second positive electrode active material can each achieve an increased specific capacity. Accordingly, the fluoride shuttle secondary battery according to the embodiment of the present disclosure can achieve an increased discharge capacity. In addition, the utilization ratio of the negative electrode active materials or the positive electrode active materials, and the cycle characteristic of the battery can be improved.

The fluoride shuttle secondary battery according to the embodiment of the present disclosure may satisfy both of the above-mentioned (A1) and (B1), or may satisfy one of the foregoing. The fluoride shuttle secondary battery according to the embodiment of the present disclosure may satisfy the above-mentioned (A1).

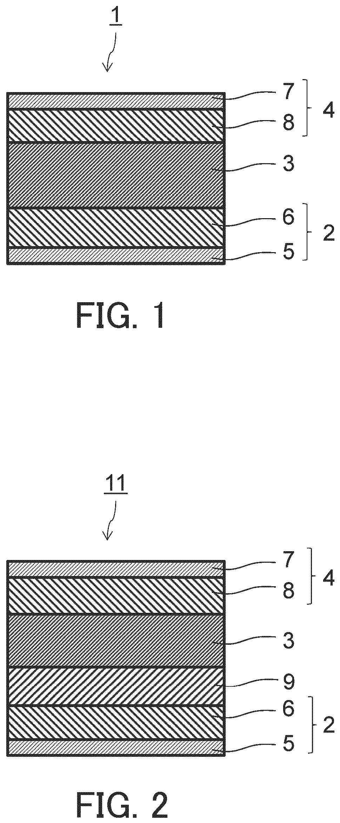

FIG. 1 is a sectional view for schematically illustrating the fluoride shuttle secondary battery according to the embodiment of the present disclosure. A fluoride shuttle secondary battery 1 illustrated in FIG. 1 includes a positive electrode 2, an electrolyte layer 3, and a negative electrode 4.

The electrolyte layer 3 is arranged between the positive electrode 2 and the negative electrode 4. The positive electrode 2 includes, for example, a positive electrode collector 5 and a positive electrode active material layer 6. The negative electrode 4 includes, for example, a negative electrode collector 7 and a negative electrode active material layer 8.

The negative electrode active material layer 8 contains a negative electrode active material. The negative electrode active material is a material that can occlude and release a fluoride ion along with the charging and discharging of the battery. The occlusion and the release include both of a mode involving a chemical reaction with the fluoride ion and a mode that does not involve any chemical reaction such as intercalation. The chemical reaction includes a reaction that forms a compound and a reaction that forms a composite that is not a compound, such as an alloy or a solid solution.

The negative electrode active material may be a substance that shows a potential in terms of standard electrode potential lower than that of a positive electrode active material to be combined therewith in the fluoride shuttle secondary battery 1.

The negative electrode active material layer 8 may contain the negative electrode active material and a solid electrolyte. The negative electrode active material may include a first negative electrode active material and a second negative electrode active material having composition different from that of the first negative electrode active material. When the fluoride shuttle secondary battery according to the embodiment of the present disclosure satisfies the above-mentioned (A1), the negative electrode active material layer 8 contains the first negative electrode active material and the second negative electrode active material having composition different from that of the first negative electrode active material. The first negative electrode active material is a first metal fluoride containing a metal M1, and the metal M1 has a melting point of 0°C or more and 250°C or less.

The metal M1 may contain at least one selected from the group consisting of: Na; K; Rb; In; Ga; Sn; Cs; Se; and Li. Accordingly, the first negative electrode active material may be a first metal fluoride containing at least one selected from the group consisting of: Na; K; Rb; In; Ga; Sn; Cs; Se; and Li.

According to the foregoing, when the battery operates in an environment at a temperature equal to or more than the melting point of the metal M1, as a result of its charging, the first metal fluoride is defluorinated by the charging reaction of the negative electrode active materials to produce the metal M1. Then, the produced metal M1 is melted to spread in the negative electrode active material layer 8. Thus, in the negative electrode active material layer 8, satisfactory material transfer between the negative electrode active materials, or between the negative electrode active materials and the solid electrolyte can be achieved. Thus, the discharge capacity of the fluoride shuttle secondary battery can be increased.

The metal M1 may have a melting point of 25°C or more, or may have a melting point of 50°C or more. The metal M1 may have a melting point of 180°C or less, or may have a melting point of 150°C or less. The metal M1 may have a melting point of 25°C or more and 180°C or less. The metal M1 may have a melting point of 50°C or more and 150°C or less.

The metal M1 may contain Na. The metal M1 may be Na. That is, the first metal fluoride may be NaF. According to the foregoing, when the battery operates in an environment at a temperature equal to or more than the melting point of Na, Na is melted by the charging. Thus, the molten Na spreads in the negative electrode active material layer 8, and hence, in the negative electrode active material layer 8, satisfactory material transfer between the negative electrode active materials, or between the negative electrode active materials and the solid electrolyte can be achieved. Thus, the discharge capacity of the fluoride shuttle secondary battery can be increased.

The metal M1 may contain Na and at least one selected from the group consisting of: K; Rb; and Li. The metal M1 may contain Na and K. The metal M1 may be an alloy of Na and any other metal. When the metal M1 is an alloy of Na and any other element, a fluoride shuttle secondary battery increased in discharge capacity at the time of its use at low temperatures can be achieved because the metal M1 is melted by the charging of the battery at low temperatures. The metal M1 may be an alloy of Na and K. In the case where the metal M1 is the alloy of Na and K, a fluoride shuttle secondary battery increased in discharge capacity at the time of its use at low temperatures can be achieved because the metal M1 is melted by the charging of the battery at a temperature lower than that in the case where Na is used alone.

The first negative electrode active material or the metal M1 may be evenly mixed with any other substance in the negative electrode active material layer 8. The first negative electrode active material or the metal M1 may be uniformly distributed in the negative electrode active material layer 8. Thus, satisfactory material transfer between the negative electrode active materials, or between the negative electrode active materials and the solid electrolyte can be achieved, and hence the discharge capacity of the fluoride shuttle secondary battery can be increased.

The distribution of the first negative electrode active material or the metal M1 may be observed by, for example, a combination of a scanning electron microscope (SEM) and energy dispersive X-ray spectroscopy (EDX), that is, SEM-EDX.

The second negative electrode active material may be a second metal fluoride. The fluorination potential and defluorination potential of the second metal fluoride may each be more than -3.0 V (vs. Pb/PbF₂) and less than -1.0 V (vs. Pb/PbF₂). The incorporation of such second negative electrode active material can increase the energy density of the fluoride shuttle secondary battery 1.

The second metal fluoride may be at least one selected from the group consisting of: LaF₃; AlF₃; MgF₂; CeF₃; GdF₃; YF₃; EuF₃; SmF₃; NdF₃; and TiF₃. That is, the second negative electrode active material may be at least one selected from the group consisting of: LaF₃; AlF₃; MgF₂; CeF₃; GdF₃; YF₃; EuF₃; SmF₃; NdF₃; and TiF₃. The incorporation of such second negative electrode active material can increase the discharge capacity of the fluoride shuttle secondary battery 1. The following is permitted: the first metal fluoride is NaF, and the second metal fluoride is at least one selected from the group consisting of: LaF₃; AlF₃; MgF₂; CeF₃; GdF₃; YF₃; EuF₃; SmF₃; NdF₃; and TiF₃.

The second metal fluoride may be at least one selected from the group consisting of: LaF₃; AlF₃; and GdF₃. The second metal fluoride may be LaF₃. The following is permitted: the first metal fluoride is NaF, and the second metal fluoride is at least one selected from the group consisting of: LaF₃; AlF₃; and GdF₃.

A difference in fluorination potential between the first metal fluoride and the second metal fluoride, and a difference in defluorination potential therebetween may each be 0 V or more and 1.0 V or less.

The mass ratio of the second negative electrode active material in the negative electrode may be larger than the mass ratio of the first negative electrode active material in the negative electrode.

The negative electrode 4 may further contain a third negative electrode active material having composition different from that of each of the first negative electrode active material and the second negative electrode active material. The third negative electrode active material may be a third metal fluoride. For example, the third metal fluoride may be a metal fluoride containing at least one of the metals given as examples of the metal M1, or may be any one of the metal fluorides given as examples of the second metal fluoride. The third metal fluoride may contain a metal that can form an alloy or a solid solution with the metal M1 incorporated into the first metal fluoride. The third metal fluoride may be KF.

A material known as a solid electrolyte material having fluoride ion conductivity may be used as the solid electrolyte in the negative electrode active material layer 8. Examples thereof include Ce₁₋ₓSrₓF₃₋ₓ (0≤x≤1), La₁₋ₓCaₓF₃₋ₓ (0≤x≤1), La₁₋ₓBaₓF₃₋ₓ (0≤x≤1), La₁₋ₓSrₓF₃₋ₓ (0≤x≤1), Ca₂₋ₓBaₓF₄ (0≤x≤2), and Ce₁₋ₓBaₓF₃₋ₓ (0≤x≤1).

The thickness of the negative electrode active material layer 8 is, for example, 1 µm or more and 500 µm or less. The thickness of the negative electrode active material layer 8 may be 1 µm or more and 400 µm or less, and may be 30 µm or more and 200 µm or less. When the thickness of the negative electrode active material layer 8 falls within such ranges, the energy density of the fluoride shuttle secondary battery 1 can be further increased, and the battery can be more stably operated at a high output.

The positive electrode active material layer 6 contains a positive electrode active material. The positive electrode active material is a material that can occlude and release a fluoride ion along with the charging and discharging of the fluoride shuttle secondary battery 1. The occlusion and the release include both of a mode involving a chemical reaction with the fluoride ion and a mode that does not involve any chemical reaction such as intercalation. The chemical reaction includes a reaction that forms a compound and a reaction that forms a composite that is not a compound, such as an alloy or a solid solution.

The positive electrode active material may be a substance that shows a potential in terms of standard electrode potential higher than that of a negative electrode active material to be combined therewith in the fluoride shuttle secondary battery 1.

The positive electrode active material layer 6 in the positive electrode 2 may contain, for example, the positive electrode active material and a solid electrolyte. The positive electrode active material may contain a metal Me.

The metal Me may contain, for example, at least one selected from the group consisting of: Cu; Bi; Pb; Sb; Fe; Zn; Ni; Mn; Sn; Ag; Cr; In; Ti; and Co. In the positive electrode 2, the metal Me may be a simple substance or a composite, such as an alloy or a solid solution. The inclusion of the positive electrode 2 containing such metal Me can increase the charge-discharge capacity of the fluoride shuttle secondary battery 1.

The metal Me may be at least one selected from the group consisting of: Pb; Cu; Bi; Sn; and Ag. Thus, the energy density of the fluoride shuttle secondary battery 1 can be further increased.

The positive electrode active material layer 6 may contain two or more positive electrode active materials different from each other in composition.

When the fluoride shuttle secondary battery according to the embodiment of the present disclosure satisfies the above-mentioned (B1), the positive electrode active material layer 6 contains a first positive electrode active material and a second positive electrode active material having composition different from that of the above-mentioned first positive electrode active material. The first positive electrode active material is a metal M2, and when the metal M2 is in the state of a metal fluoride represented by M2Fₓ, the melting point of the metal fluoride is 0°C or more and 250°C or less, where "x" represents the valence of the M2.

According to the foregoing, when the battery operates in an environment at a temperature equal to or more than the melting point of the M2Fₓ, the M2Fₓ is melted by the charging to spread in the positive electrode active material layer 6. Thus, in the positive electrode active material layer 6, satisfactory material transfer between the positive electrode active materials, or between the positive electrode active materials and the solid electrolyte can be achieved. Thus, the discharge capacity of the fluoride shuttle secondary battery can be increased.

The M2Fₓ may have a melting point of 25°C or more and 250°C or less. The M2Fₓ may have a melting point of 50°C or more and 250°C or less.

The metal M2 serving as the first positive electrode active material is, for example, at least one selected from the group consisting of: Sn; Nb; and Ta.

The second positive electrode active material may contain at least one of the metals described above as the metal Me. The second positive electrode active material may be at least one of the metals described above as the metal Me.

The mass ratio of the second positive electrode active material in the positive electrode may be larger than the mass ratio of the first positive electrode active material in the positive electrode.

A material known as a solid electrolyte material having fluoride ion conductivity may be used as the solid electrolyte in the positive electrode active material layer 6. The solid electrolyte in the positive electrode active material layer 6 may be any one of the materials described above as the solid electrolyte in the negative electrode active material layer 8. The solid electrolyte in the positive electrode active material layer 6 may be a material having the same composition as that of the solid electrolyte in the negative electrode active material layer 8.

The thickness of the positive electrode active material layer 6 is, for example, 1 µm or more and 500 µm or less. The thickness of the positive electrode active material layer 6 may be 1 µm or more and 400 µm or less, and may be 50 µm or more and 200 µm or less. When the thickness of the positive electrode active material layer 6 falls within such ranges, the energy density of the fluoride shuttle secondary battery 1 can be further increased, and the battery can be more stably operated at a high output.

The fluoride shuttle secondary battery according to the embodiment of the present disclosure may include a positive electrode buffer layer between the positive electrode and the electrolyte layer. FIG. 2 is a sectional view for schematically illustrating a modification of the fluoride shuttle secondary battery according to the embodiment of the present disclosure. As illustrated in FIG. 2, a fluoride shuttle secondary battery 11 includes a positive electrode buffer layer 9 between, for example, the positive electrode active material layer 6 and the electrolyte layer 3.

The positive electrode buffer layer 9 is, for example, a layer containing a positive electrode buffer material that is a compound containing the same metal element as the metal Me in the positive electrode active material. According to the foregoing configuration, the deterioration of the capacity of the fluoride shuttle secondary battery can be suppressed, and hence the cycle characteristic of the fluoride shuttle secondary battery can be improved. For example, when the positive electrode active material is lead, the positive electrode buffer material may be Pb₁₋ₐSnₐF₂ where "a" may satisfy, for example, 0≤a≤1, or may satisfy 0<a<1.

In the positive electrode 2, for example, the positive electrode active material layer 6 may contain a conductive additive. In addition, in the negative electrode 4, for example, the negative electrode active material layer 8 may contain a conductive additive. When the conductive additive is incorporated, the resistance of each of the positive electrode 2 and the negative electrode 4 can be reduced.

The conductive additive is not limited as long as the conductive additive has electron conductivity. Examples of the conductive additive include: graphites, such as natural graphite and artificial graphite; carbon blacks, such as acetylene black and ketjen black; conductive fibers, such as carbon fibers and metal fibers; conductive powders, such as fluorocarbon and aluminum powders; conductive whiskers, such as zinc oxide and potassium titanate whiskers; conductive metal oxides such as titanium oxide; and conductive polymer compounds, such as polyaniline, polypyrrole, and polythiophene. For example, the use of each of carbon-based conductive additives, such as graphites and carbon blacks, can reduce the cost of the fluoride shuttle secondary battery 1.

The positive electrode collector 5 and the negative electrode collector 7 each have electron conductivity. The positive electrode collector 5 and the negative electrode collector 7 may each include a material that has electron conductivity and hardly corrodes under the environment in which the fluoride shuttle secondary battery 1 is charged and discharged.

The positive electrode collector 5 includes, for example, a metal material, such as aluminum, gold, or platinum, or an alloy thereof. The shape of the positive electrode collector 5 is not limited, and is, for example, a sheet or a film. The sheet and the film include foil. Aluminum and an alloy thereof are inexpensive, and are easily thinned. The positive electrode collector 5 may include carbon-coated aluminum. The thickness of the positive electrode collector 5 is, for example, 1 µm or more and 30 µm or less. When the thickness of the positive electrode collector 5 falls within the range, the strength of the collector can be more reliably secured, and hence, for example, the cracking and breakage of the collector are suppressed. In addition, the energy density of the fluoride shuttle secondary battery 1 can be more reliably secured.

The positive electrode collector 5 may have a positive electrode terminal.

The negative electrode collector 7 includes, for example, a metal material, such as platinum or aluminum, or an alloy thereof. The shape of the negative electrode collector 7 is not limited, and is, for example, a sheet or a film. The sheet and the film include foil. Aluminum and an alloy thereof are inexpensive, and are easily thinned. The negative electrode collector 7 may include carbon-coated aluminum. The thickness of the negative electrode collector 7 is, for example, 1 µm or more and 30 µm or less. When the thickness of the negative electrode collector 7 falls within the range, the strength of the collector can be more reliably secured, and hence, for example, the cracking and breakage of the collector are suppressed. In addition, the energy density of the fluoride shuttle secondary battery 1 can be more reliably secured.

The electrolyte layer 3 is a layer having fluoride ion conductivity in its thickness direction, that is, the direction in which the positive electrode 2 and the negative electrode 4 are laminated. The electrolyte layer 3 typically has no electron conductivity in the thickness direction. The thickness of the electrolyte layer 3 is, for example, 1 µm or more and 1,000 µm or less. The thickness of the electrolyte layer 3 may be 10 µm or more and 800 µm or less, and may be 20 µm or more and 700 µm or less. When the thickness of the electrolyte layer 3 falls within such ranges, an electrical short circuit between the positive electrode 2 and the negative electrode 4 is suppressed, and the fluoride ion conductivity can be more reliably secured. The fluoride ion conductivity can be more reliably secured, and hence the fluoride shuttle secondary battery 1 having a higher output characteristic can be built.

The electrolyte layer 3 may contain a solid electrolyte. A material known as a solid electrolyte material having fluoride ion conductivity may be used as the solid electrolyte in the electrolyte layer 3. The solid electrolyte in the electrolyte layer 3 may be any one of the materials described above as the solid electrolyte in the negative electrode active material layer 8. The solid electrolyte in the electrolyte layer 3 may be a material having the same composition as that of the solid electrolyte in the negative electrode active material layer 8, or may be a material having the same composition as that of the solid electrolyte in the positive electrode active material layer 6. The electrolyte layer 3 may be a solid electrolyte layer.

When the electrolyte layer 3 has the above-mentioned configuration, the charge-discharge capacity of the fluoride shuttle secondary battery 1 can be increased.

A layer containing a particulate material may further contain a binder that binds the particles to each other. The binder can improve a binding property between the particles in the layer. In addition, the binder can improve bondability (adhesion strength) with an adjacent layer. For example, in the case where the positive electrode active material layer 6 or the negative electrode active material layer 8 contains the particulate material, when such active material layer further contains the binder, bondability between the active material layer and the positive electrode collector 5 or the negative electrode collector 7 adjacent to the active material layer can be improved. Such improvement in bondability contributes to the thinning of each layer. This is because in each of the positive electrode active material layer 6 and the negative electrode active material layer 8, for example, electrode active materials can be more reliably brought into contact with each other. In the electrolyte layer 3, electrolyte materials can be more reliably brought into contact with each other. The thinning of each layer can further increase the energy density of the fluoride shuttle secondary battery 1.

The binder is not limited. For example, the binder may be a binder including a fluorine-based resin, a polymer compound, or a rubbery polymer. Examples of the fluorine-based resin included in the binder include polyvinylidene fluoride (PVDF), polytetrafluoroethylene (PTFE), a tetrafluoroethylene-hexafluoropropylene copolymer (FEP), a tetrafluoroethylene-hexafluoroethylene copolymer, poly(vinylidene fluoride), a tetrafluoroethylene-perfluoroalkyl vinyl ether copolymer (PFA), a vinylidene fluoride-hexafluoropropylene copolymer, a vinylidene fluoride-chlorotrifluoroethylene copolymer, an ethylene-tetrafluoroethylene copolymer (ETFE), polychlorotrifluoroethylene (PCTFE), a vinylidene fluoride-hexafluoropropylene-tetrafluoroethylene copolymer, a vinylidene fluoride-perfluoromethyl vinyl ether-tetrafluoroethylene copolymer, and an ethylene-chlorotrifluoroethylene copolymer (ECTFE). Examples of the polymer compound include carboxymethylcellulose, polyacrylonitrile, polyethylene oxide, polypropylene oxide, polyvinyl chloride, polymethyl methacrylate, polymethyl acrylate, polymethacrylic acid, polyacrylic acid, polyvinyl alcohol, polyvinylidene chloride, polyethyleneimine, polymethacrylonitrile, polyvinyl acetate, polyimide, polyamic acid, polyamide imide, polyethylene, polypropylene, an ethylene-propylene-diene terpolymer, polyvinyl acetate, nitrocellulose, an ethylene-acrylic acid copolymer, an ethylene-methacrylic acid copolymer, an ethylene-methyl acrylate copolymer, an ethylene-methyl methacrylate copolymer, a polyester resin, a monoalkyltrialkoxysilane polymer, and a polymer obtained by copolymerizing a monoalkyltrialkoxysilane polymer and a tetraalkoxysilane monomer. Examples of the rubbery polymer include a styrene-butadiene rubber (SBR), a butadiene rubber (BR), a styrene-isoprene copolymer, an isobutylene-isoprene copolymer (butyl rubber), an acrylonitrile-butadiene rubber, an ethylene-propylene-diene copolymer, an acrylonitrile-butadiene copolymer (NBR), a hydrogenated SBR, a hydrogenated **NBR, an** ethylene-propylene-diene monomer (EPDM), and a sulfonated EPDM.

When the binder is an insulating substance that does not conduct a fluoride ion, an insulating substance that does not conduct an electron, or an insulating substance that conducts neither a fluoride ion nor an electron, an excessive increase in content of the binder in each layer may reduce the charge-discharge characteristic of the battery or rather reduce the energy density thereof. From this viewpoint, the content of the binder, which is any one of the above-mentioned insulating substances, in the layer containing the binder is, for example, 20 mass% or less, and may be 5 mass% or less.

The binder may have fluoride ion conductivity. The binder having fluoride ion conductivity is, for example, an ion-conductive polymer having added thereto a metal fluoride. When the binder has fluoride ion conductivity, the fluoride ion conductivity is improved as compared to that of an insulating binder, and hence improvements in charge-discharge characteristic and energy density of the battery can be expected.

### (Second Embodiment)

A method of using a battery in a second embodiment is a method of using a fluoride shuttle secondary battery including: a positive electrode; a negative electrode; and an electrolyte layer arranged between the positive electrode and the negative electrode, wherein the usage method satisfies at least one selected from the group consisting of the following (A2) and (B2).
(A2) The negative electrode contains a first negative electrode active material and a second negative electrode active material having composition different from that of the first negative electrode active material, the first negative electrode active material is a first metal fluoride containing a metal M1, and the usage method includes charging the fluoride shuttle secondary battery at a temperature equal to or more than a temperature at which the metal M1 is melted.
(B2) The positive electrode contains a first positive electrode active material and a second positive electrode active material having composition different from that of the first positive electrode active material, the first positive electrode active material is a metal M2, and the usage method includes charging the fluoride shuttle secondary battery at a temperature equal to or more than a temperature at which a fluoride represented by M2Fₓ is melted, where "x" represents a valence of the M2.

When the usage method in the second embodiment satisfies the above-mentioned (A2), the method includes charging the fluoride shuttle secondary battery at a temperature equal to or more than the temperature at which the metal M1 is melted. Accordingly, the metal M1 produced from the first metal fluoride in the negative electrode is melted by the charging. According to the foregoing, the molten metal M1 spreads around the negative electrode active materials, and hence satisfactory material transfer between the negative electrode active materials can be achieved. In addition, when the negative electrode includes a negative electrode active material layer containing the negative electrode active materials and a solid electrolyte, satisfactory material transfer between the negative electrode active materials and the solid electrolyte can also be achieved. Accordingly, the usage method according to the embodiment of the present disclosure can increase the discharge capacity of the fluoride shuttle secondary battery. In addition, the usage method according to the embodiment of the present disclosure can improve the utilization ratio of the negative electrode active materials and the cycle characteristic of the battery.

When the usage method in the second embodiment satisfies the above-mentioned (B2), the method includes charging the fluoride shuttle secondary battery at a temperature equal to or more than the temperature at which the M2Fₓ is melted. Accordingly, the M2Fₓ produced from the metal M2 in the positive electrode is melted by the charging. According to the foregoing, the molten M2Fₓ spreads around the positive electrode active materials, and hence satisfactory material transfer between the positive electrode active materials can be achieved. In addition, when the positive electrode includes a positive electrode active material layer containing the positive electrode active materials and a solid electrolyte, satisfactory material transfer between the positive electrode active materials and the solid electrolyte can also be achieved. Accordingly, the usage method according to the embodiment of the present disclosure can increase the discharge capacity of the fluoride shuttle secondary battery. In addition, the usage method according to the embodiment of the present disclosure can improve the utilization ratio of the positive electrode active materials and the cycle characteristic of the battery.

The usage method in the second embodiment may satisfy the above-mentioned (A2).

The above-mentioned fluoride shuttle secondary battery to be used in the usage method in the second embodiment may be the fluoride shuttle secondary battery in the first embodiment.

When the usage method in the second embodiment satisfies the above-mentioned (A2), the method does not specify that the battery is charged and used only under the temperature condition in which the M1 is melted, and the method encompasses all aspects in which the battery is charged and used at the temperature at which the M1 is melted. That is, when the usage method in the second embodiment satisfies the above-mentioned (A2), the highest temperature at the time of the charging only needs to reach the temperature at which the M1 is melted, and hence the method also encompasses an aspect in which the battery is used in an environment where the lowest temperature is a temperature at which the M1 is not melted. In addition, when the usage method in the second embodiment satisfies the above-mentioned (B2), the method does not specify that the battery is charged and used only under the temperature condition under which the M2Fₓ is melted, and the method encompasses all aspects in which the battery is charged and used at the temperature at which the M2Fₓ is melted. That is, when the usage method in the second embodiment satisfies the above-mentioned (B2), the highest temperature at the time of the charging only needs to reach the temperature at which the M2Fₓ is melted, and hence the method also encompasses an aspect in which the battery is used in an environment where the lowest temperature is a temperature at which the M2Fₓ is not melted.

### (Other Embodiment)

### (Additional Remark)

The following technologies are disclosed by the foregoing description of the embodiments.

### (Technology 1)

A fluoride shuttle secondary battery, including:
a positive electrode;
a negative electrode; and
an electrolyte layer arranged between the positive electrode and the negative electrode,
wherein the fluoride shuttle secondary battery satisfies at least one selected from the group consisting of the following (A1) and (B1):
   (A1) the negative electrode contains a first negative electrode active material and a second negative electrode active material having composition different from that of the first negative electrode active material,
      the first negative electrode active material is a first metal fluoride containing a metal M1, and
      the metal M1 has a melting point of 0°C or more and 250°C or less; and
   (B1) the positive electrode contains a first positive electrode active material and a second positive electrode active material having composition different from that of the first positive electrode active material, and
      the first positive electrode active material is a metal M2, which forms a metal fluoride represented by M2Fₓ and having a melting point of 0°C or more and 250°C or less,
      where "x" represents a valence of the M2.

With this configuration, the metal M1 may melt in the negative electrode or the metal fluoride M2Fₓ may melt in the positive electrode by the charging of the battery. For example, when the battery operates in an environment at a temperature equal to or more than the melting point of the metal M1, as a result of the charging, the first metal fluoride is defluorinated by the charging reaction of the negative electrode active materials to produce the metal M1, and the produced metal M1 is melted. When the battery operates in an environment at a temperature equal to or more than the melting point of the M2Fₓ, as a result of the charging, the metal M2 is fluorinated by the charging reaction of the positive electrode active materials to produce the M2Fₓ, and the produced M2Fₓ is melted. According to the foregoing, the molten metal M1 or M2Fₓ spreads around the negative electrode active materials or the positive electrode active materials, and hence satisfactory material transfer between the negative electrode active materials or the positive electrode active materials can be achieved. Accordingly, the negative electrode active materials or the positive electrode active materials can each achieve an increased specific capacity. Accordingly, the fluoride shuttle secondary battery according to the embodiment of the present disclosure can achieve an increased discharge capacity. In addition, the utilization ratio of the active materials and the cycle characteristic of the battery can be improved.

### (Technology 2)

The fluoride shuttle secondary battery according to Technology 1, wherein when the (A1) is satisfied, the metal M1 is melted by charging, and wherein when the (B1) is satisfied, the M2Fₓ is melted by the charging. With this configuration, the molten metal M1 spreads around the negative electrode active materials, and hence satisfactory material transfer between the negative electrode active materials can be achieved. In addition, when the negative electrode includes a negative electrode active material layer containing the negative electrode active materials and a solid electrolyte, satisfactory material transfer between the negative electrode active materials and the solid electrolyte can also be achieved. Alternatively, the molten M2Fₓ spreads around the positive electrode active materials, and hence satisfactory material transfer between the positive electrode active materials can be achieved. In addition, when the positive electrode includes a positive electrode active material layer containing the positive electrode active materials and a solid electrolyte, satisfactory material transfer between the positive electrode active materials and the solid electrolyte can also be achieved. Accordingly, a fluoride shuttle secondary battery increased in discharge capacity can be achieved. In addition, the utilization ratio of the active materials and the cycle characteristic of the battery can be improved.

### (Technology 3)

The fluoride shuttle secondary battery according to Technology 1 or 2, wherein the (A1) is satisfied. With this configuration, the metal M1, which has been produced from the first metal fluoride and melted by the charging of the battery, spreads around the negative electrode active materials, and hence satisfactory material transfer between the negative electrode active materials can be achieved. In addition, when the negative electrode includes a negative electrode active material layer containing the negative electrode active materials and a solid electrolyte, satisfactory material transfer between the negative electrode active materials and the solid electrolyte can also be achieved. Accordingly, a fluoride shuttle secondary battery increased in discharge capacity can be achieved. In addition, the utilization ratio of the negative electrode active materials and the cycle characteristic of the battery can be improved.

### (Technology 4)

The fluoride shuttle secondary battery according to any one of Technologies 1 to 3, wherein the metal M1 has a melting point of 25°C or more and 180°C or less. With this configuration, when the battery operates at a temperature higher than the above-mentioned melting point, the metal M1 is melted. Thus, the metal M1, which has been produced from the first metal fluoride and melted, spreads around the negative electrode active materials, and hence satisfactory material transfer between the negative electrode active materials can be achieved. In addition, when the negative electrode includes a negative electrode active material layer containing the negative electrode active materials and a solid electrolyte, satisfactory material transfer between the negative electrode active materials and the solid electrolyte can also be achieved. Accordingly, a fluoride shuttle secondary battery increased in discharge capacity can be achieved. In addition, the utilization ratio of the negative electrode active materials and the cycle characteristic of the battery can be improved.

### (Technology 5)

The fluoride shuttle secondary battery according to any one of Technologies 1 to 4, wherein the metal M1 contains Na. With this configuration, when the battery operates in an environment at a temperature equal to or more than the melting point of the Na, the Na produced from the first metal fluoride is melted by the charging. Thus, the molten Na spreads around the negative electrode active materials, and hence satisfactory material transfer between the negative electrode active materials can be achieved. In addition, when the negative electrode includes a negative electrode active material layer containing the negative electrode active materials and a solid electrolyte, satisfactory material transfer between the negative electrode active materials and the solid electrolyte can also be achieved. Thus, the discharge capacity of the fluoride shuttle secondary battery can be increased.

### (Technology 6)

The fluoride shuttle secondary battery according to any one of Technologies 1 to 5, wherein the metal M1 contains Na and at least one selected from the group consisting of: K; Rb; and Li. With this configuration, a fluoride shuttle secondary battery increased in discharge capacity at the time of its use at low temperatures can be achieved.

### (Technology 7)

The fluoride shuttle secondary battery according to any one of Technologies 1 to 6, wherein the second negative electrode active material is a second metal fluoride, and wherein a fluorination potential and a defluorination potential of the second metal fluoride are each more than -3.0 V (vs. Pb/PbF₂) and less than -1.0 V (vs. Pb/PbF₂). With this configuration, the energy density of the fluoride shuttle secondary battery can be increased.

### (Technology 8)

The fluoride shuttle secondary battery according to any one of Technologies 1 to 7, wherein the second negative electrode active material is a second metal fluoride, and wherein a difference in fluorination potential between the first metal fluoride and the second metal fluoride, and a difference in defluorination potential therebetween are each 0 V or more and 1.0 V or less. With this configuration, the discharge capacity of the fluoride shuttle secondary battery can be increased.

### (Technology 9)

The fluoride shuttle secondary battery according to any one of Technologies 1 to 8, wherein the second negative electrode active material is at least one selected from the group consisting of: LaF₃; AlF₃; MgF₂; CeF₃; GdF₃; YF₃; EuF₃; SmF₃; NdF₃; and TiF₃. With this configuration, the discharge capacity of the fluoride shuttle secondary battery can be increased.

### (Technology 10)

The fluoride shuttle secondary battery according to any one of Technologies 1 to 9, wherein the metal M1 contains Na, and wherein the second negative electrode active material is at least one selected from the group consisting of: LaF₃; AlF₃; MgF₂; CeF₃; GdF₃; YF₃; EuF₃; SmF₃; NdF₃; and TiF₃. With this configuration, the discharge capacity of the fluoride shuttle secondary battery can be increased.

### (Technology 11)

A method of using a fluoride shuttle secondary battery including:
a positive electrode;
a negative electrode; and
an electrolyte layer arranged between the positive electrode and the negative electrode,
wherein the usage method satisfies at least one selected from the group consisting of the following (A2) and (B2):
   (A2) the negative electrode contains a first negative electrode active material and a second negative electrode active material having composition different from that of the first negative electrode active material,
      the first negative electrode active material is a first metal fluoride containing a metal M1, and
      the usage method includes charging the fluoride shuttle secondary battery at a temperature equal to or more than a temperature at which the metal M1 is melted; and
   (B2) the positive electrode contains a first positive electrode active material and a second positive electrode active material having composition different from that of the first positive electrode active material,
      the first positive electrode active material is a metal M2, and
      the usage method includes charging the fluoride shuttle secondary battery at a temperature equal to or more than a temperature at which a fluoride represented by M2Fₓ is melted,
      where "x" represents a valence of the M2.

With this configuration, as a result of the charging of the battery, the first metal fluoride is defluorinated by a charging reaction in the negative electrode to produce the metal M1, and the produced metal M1 is melted. Alternatively, as a result of the charging, the metal M2 is fluorinated by a charging reaction in the positive electrode to produce the M2Fₓ, and the produced M2Fₓ is melted. Accordingly, the molten metal M1 or M2Fₓ spreads in a negative electrode active material layer or in a positive electrode active material layer, and hence satisfactory material transfer between active material particles can be achieved. Accordingly, the usage method according to Technology 11 can increase the discharge capacity of the fluoride shuttle secondary battery. In addition, the usage method according to Technology 11 can improve the utilization ratio of the active materials and the cycle characteristic of the battery.

### EXAMPLES

The present disclosure is described in more detail below by way of Examples. Examples below are each merely one aspect, and the present disclosure is not limited thereto.

### [Example 1]

### (Production of Solid Electrolyte Material)

CaF₂ powder (manufactured by Kojundo Chemical Laboratory Co., Ltd.) and BaF₂ powder (manufactured by Kojundo Chemical Laboratory Co., Ltd.) were mixed in the molar ratio of CaF₂:BaF₂=1:1, and then the mixture was subjected to milling treatment with a planetary ball mill for 10 hours. Thus, a solid electrolyte material represented by the composition formula Ca_{0.5}Ba_{0.5}F₂ (hereinafter referred to as "BCF") was obtained.

### (Production of Positive Electrode Buffer Material)

PbF₂ powder (manufactured by Kojundo Chemical Laboratory Co., Ltd.) and SnF₂ powder (manufactured by Kojundo Chemical Laboratory Co., Ltd.) were mixed in the weight ratio of PbF₂:SnF₂=15:7, and then the mixture was subjected to milling treatment with a planetary ball mill for 24 hours. Thus, a compound represented by the composition formula Pb_{0.58}Sn_{0.42}F₂ (hereinafter referred to as "PSF") was obtained.

The PSF prepared as described above and acetylene black (hereinafter referred to as "AB") (manufactured by Denka Company Limited) serving as a conductive additive were mixed in the mass ratio of PSF:AB=14:1, and then the mixture was subjected to milling treatment with a planetary ball mill for 10 hours. Thus, a positive electrode buffer material including the PSF and the AB was obtained.

### (Production of Negative Electrode Mixture)

The BCF prepared as described above, the BCF serving as a solid electrolyte material, and AB serving as a conductive additive were mixed in the mass ratio of BCF:AB=61:4, and then the mixture was subjected to milling treatment with a planetary ball mill for 10 hours.

NaF powder (manufactured by Sigma-Aldrich Co. LLC) and LaF₃ (manufactured by Sigma-Aldrich Co. LLC) were added as active materials to the above-mentioned mixture of the BCF and the AB. The contents were mixed at in the mass ratio of BCF+AB:NaF:LaF₃=65:6:29, and then the mixture was subjected to milling treatment with a planetary ball mill for 10 hours. Thus, a negative electrode mixture was obtained.

### (Production of Evaluation Cell)

An amount of 10 mg of the powder of the negative electrode mixture prepared as described above, 100 mg of the powder of the BCF serving as a solid electrolyte material, 30 mg of the powder of the mixture of the PSF and the AB serving as a positive electrode buffer material, lead foil (manufactured by The Nilaco Corporation, thickness: 200 µm) serving as a positive electrode active material layer, and aluminum foil (manufactured by The Nilaco Corporation, thickness: 10 µm) serving as a positive electrode collector were laminated in the stated order in a die having a diameter of 10 mmφ, and were subjected to pressure molding. Platinum foil (manufactured by The Nilaco Corporation, thickness: 20 µm) serving as a negative electrode collector was arranged above a layer formed of the negative electrode mixture (i.e., a negative electrode active material layer) in the resultant laminate. Thus, an evaluation cell of Example 1 was obtained.

### (Evaluation of Fluoride Shuttle Secondary Battery)

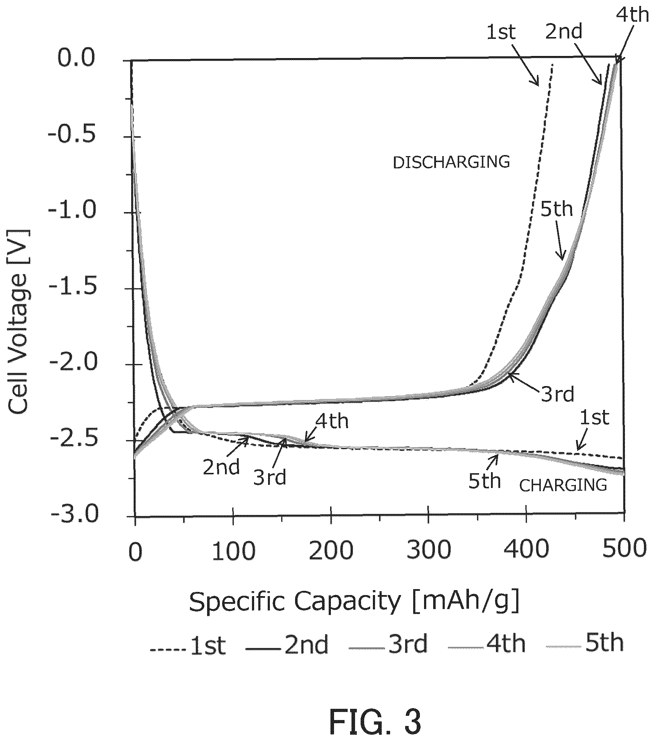

The charge-discharge evaluation of a fluoride shuttle secondary battery was performed with the evaluation cell of Example 1. The charge-discharge evaluation was performed with a potentiogalvanostat (manufactured by BioLogic Science Instruments, SP-300). A constant-current charge-discharge test was performed at a temperature of 140°C with a charging current of 40 µA and a discharging current of 40 µA. FIG. 3 is a graph showing the results of the charge-discharge test of the evaluation cell of Example 1 at 140°C. An axis of abscissa represents a specific capacity, meaning the capacity of a negative electrode active material per unit mass, and indicates an electric quantity to be charged or discharged. The theoretical specific capacity of a negative electrode used in Example 1 is 450 mAh/g. In Example 1, in the second cycle and thereafter, the cell showed a discharge capacity substantially equal to its theoretical value, and hence the capacity was free of deterioration and was stable.

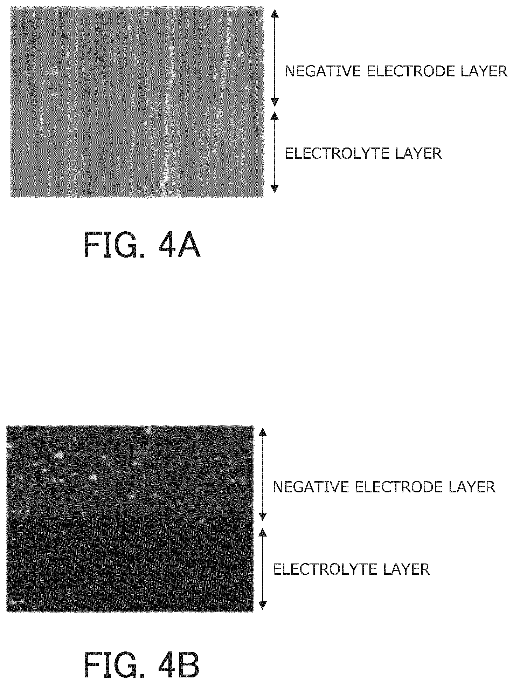

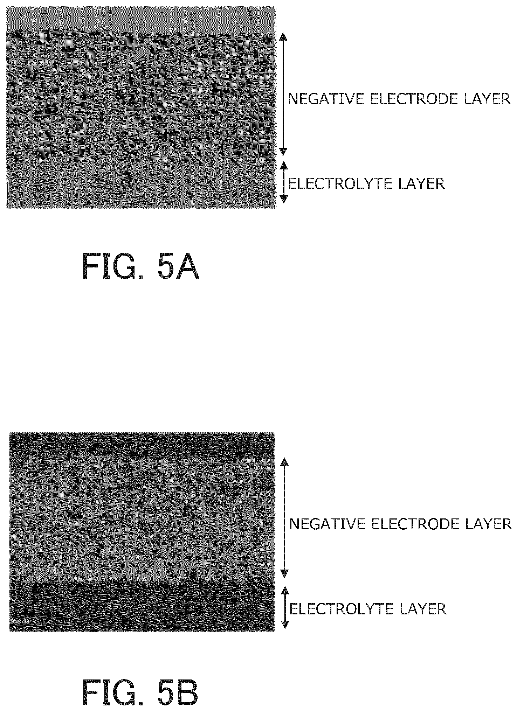

A section of the evaluation cell of Example 1 before or after its charging and discharging was subjected to SEM-EDX. FIG. 4A is a sectional SEM image of the evaluation cell of Example 1 before the charging and the discharging. FIG. 4B is a mapping image showing the distribution of Na in the image shown in FIG. 4A, the mapping image being obtained from the measurement result of the SEM-EDX. FIG. 5A is a sectional SEM image of the evaluation cell of Example 1 after the charging and the discharging. FIG. 5B is a mapping image showing the distribution of Na in the image shown in FIG. 5A, the mapping image being obtained from the measurement result of the SEM-EDX. The white sites of the respective mapping images each show that the concentration of Na is relatively high. As can be seen from FIG. 4B, before the charging and the discharging, a Na element was sparsely present in the negative electrode. However, as can be seen from FIG. 5B, after the charging and the discharging, the Na element was uniformly present in the negative electrode.

### [Comparative Example 1]

### (Production of Evaluation Cell)

An evaluation cell of Comparative Example 1 was produced in the same manner as in Example 1 except that in the production of the negative electrode mixture, NaF was not added, and the mixture of the BCF and the AB, and LaF₃ were mixed in the mass ratio of BCF+AB:LaF₃=65:35.

### (Evaluation of Fluoride Shuttle Secondary Battery)

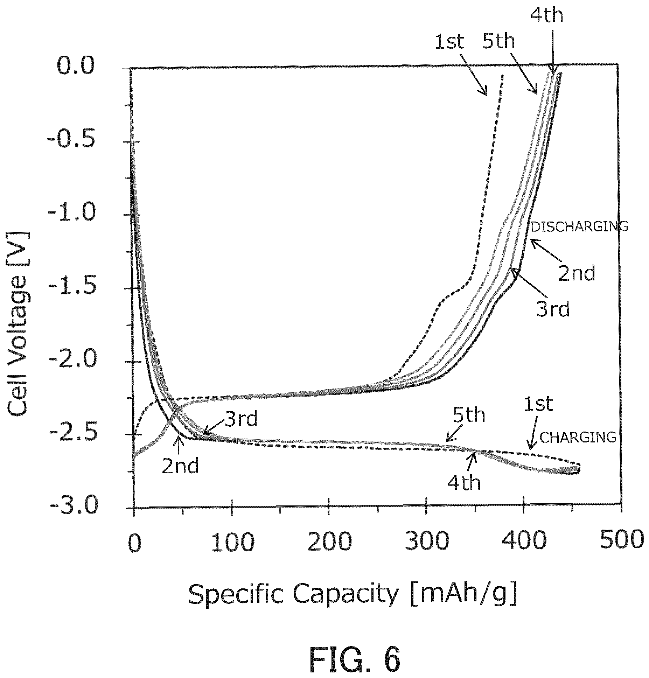

The charge-discharge evaluation of a fluoride shuttle secondary battery was performed with the evaluation cell of Comparative Example 1 in the same manner as in Example 1. FIG. 6 is a graph showing the results of the charge-discharge test of the evaluation cell of Comparative Example 1 at 140°C. An axis of abscissa represents a specific capacity, meaning the capacity of a negative electrode active material per unit mass, and indicates an electric quantity to be charged or discharged. The theoretical specific capacity of a negative electrode used in Comparative Example 1 is 410 mAh/g. In Comparative Example 1, the cell showed a discharge capacity substantially equal to its theoretical value in the second cycle, but as the number of cycles increased, the capacity reduced.

### [Comparative Example 2]

### (Production of Evaluation Cell)

An evaluation cell of Comparative Example 2 was produced in the same manner as in Example 1 except that in the production of the negative electrode mixture, LaF₃ was not added, and the mixture of the BCF and the AB, and NaF were mixed in the mass ratio of BCF+AB:NaF=65:35.

### (Evaluation of Fluoride Shuttle Secondary Battery)

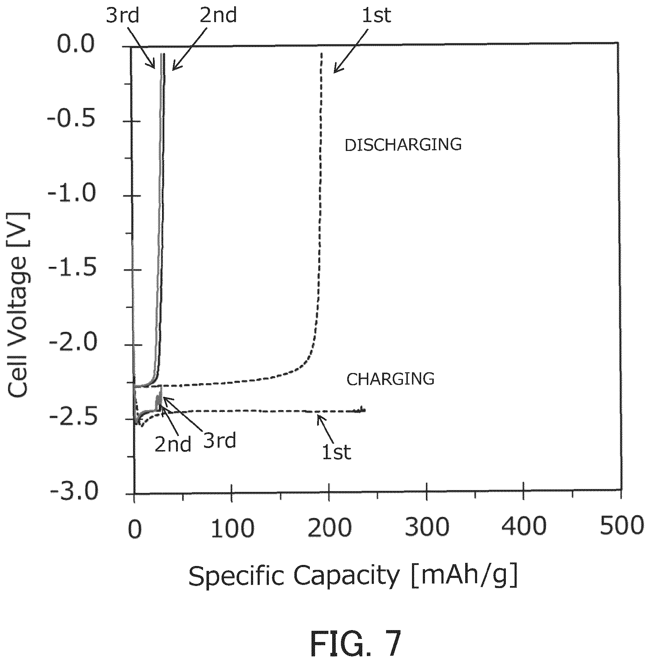

The charge-discharge evaluation of a fluoride shuttle secondary battery was performed with the evaluation cell of Comparative Example 2 in the same manner as in Example 1. FIG. 7 is a graph showing the results of the charge-discharge test of the evaluation cell of Comparative Example 2 at 140°C. An axis of abscissa represents a specific capacity, meaning the capacity of a negative electrode active material per unit mass, and indicates an electric quantity to be charged or discharged. In Comparative Example 2, the charge-discharge characteristic of the cell was extremely low because the discharge capacity thereof in the first cycle was 200 mAh/g, and the discharge capacities thereof in and after the second cycle were each as small as 50 mAh/g or less. In addition, the utilization ratio of the negative electrode active material was also extremely low because the theoretical specific capacity of a negative electrode used in Comparative Example 2 was 638 mAh/g.

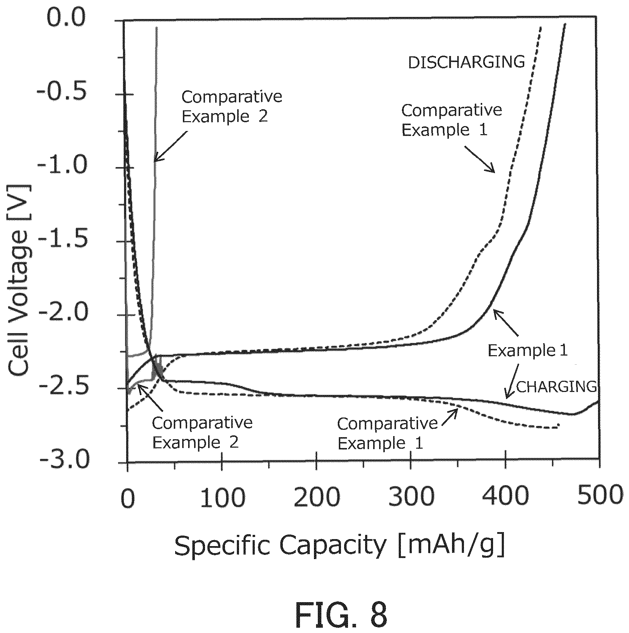

FIG. 8 is a graph showing a charge-discharge result in the second cycle of the charge-discharge test of each of the evaluation cells of Example 1, Comparative Example 1, and Comparative Example 2 at 140°C. An axis of abscissa represents a specific capacity, meaning the capacity of a negative electrode active material per unit mass, and indicates an electric quantity to be charged or discharged. The cell of Example 1 whose negative electrode contained NaF and LaF₃ as its active materials expressed a discharge capacity of about 450 mAh/g. The cell of Comparative Example 1 whose negative electrode contained only LaF₃ as its active material expressed a discharge capacity of about 400 mAh/g. The discharge capacity of Example 1 increased as compared to that of Comparative Example 1. The cell of Comparative Example 2 whose negative electrode contained only NaF as its active material expressed substantially no charge-discharge capacity.

Such a hypothesis as described below is conceivable from those results for an improvement in characteristic of the battery having added thereto NaF.

NaF is defluorinated by the charging of the battery to produce a Na metal. The Na metal is melted to liquefy because the temperature at which the battery operates is 140°C, which is equal to or more than the melting point (98°C) of the Na metal. The liquefied Na metal diffuses between the particles of the negative electrode mixture to spread at an interface between the BCF serving as a solid electrolyte and LaF₃ serving as an active material. It is conceivable that material transfer at the interface was improved by the spread Na metal to lead to such improvement in battery characteristic.

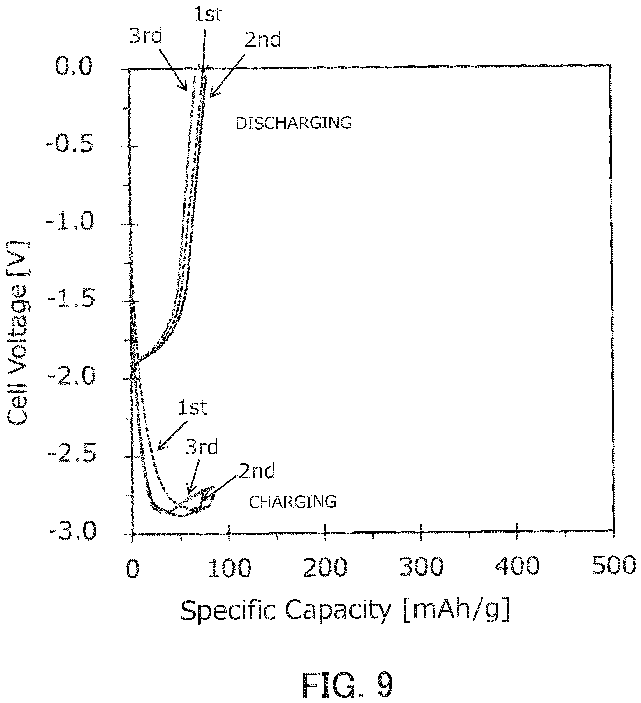

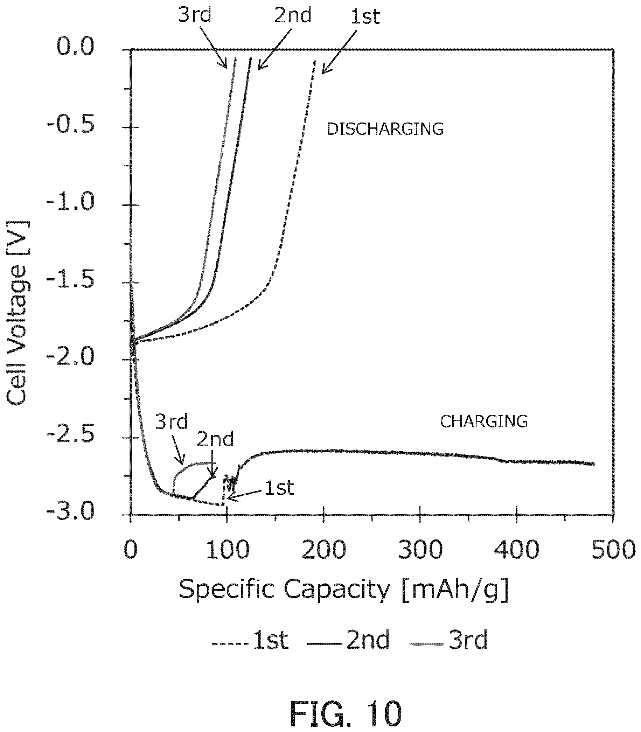

To verify the hypothesis, the same cell as the evaluation cell of Example 1 was subjected to a charge-discharge test in the same manner as in Example 1 while its temperature was set to 90°C. FIG. 9 is a graph showing the results of the charge-discharge test of the evaluation cell of Example 1 at 90°C. An axis of abscissa represents a specific capacity, meaning the capacity of a negative electrode active material per unit mass, and indicates an electric quantity to be charged or discharged. As a result of the measurement of the charge-discharge characteristic of the cell at 90°C, which was a temperature lower than the melting point of the Na metal, the capacity thereof was 100 mAh/g or less, and was hence extremely low. In addition, the same cell as the evaluation cell of Example 1 was operated for 2 cycles at 140°C, and then its charge-discharge characteristic was measured while its temperature was set to 90°C. FIG. 10 is a graph showing the results of the charge-discharge test of the evaluation cell of Example 1 at 90°C after the cell has been operated for 2 cycles at 140°C. An axis of abscissa represents a specific capacity, meaning the capacity of a negative electrode active material per unit mass, and indicates an electric quantity to be charged or discharged. As can be seen from FIG. 10, the discharge capacity of the cell was lower than that in the case of 140°C, and as the number of cycles increased, the capacity deteriorated. As a result, a satisfactory characteristic was not obtained. Accordingly, it is found that when the temperature at which the battery operates is equal to or more than the melting point of the Na metal, the evaluation cell of Example 1 can achieve a satisfactory charge-discharge characteristic.

### [Example 2]

### (Production of Evaluation Cell)

In the production of the negative electrode mixture, NaF having added thereto 10 mol% of KF (manufactured by Sigma-Aldrich Co. LLC) was used instead of NaF. That is, the mixture of the BCF and the AB, NaF, KF, and LaF₃ were mixed in the mass ratio of BCF+AB:NaF:KF:LaF₃=65:5.15:0.85:29. An evaluation cell of Example 2 was produced in the same manner as in Example 1 except for the matter described above.

### (Evaluation of Fluoride Shuttle Secondary Battery)

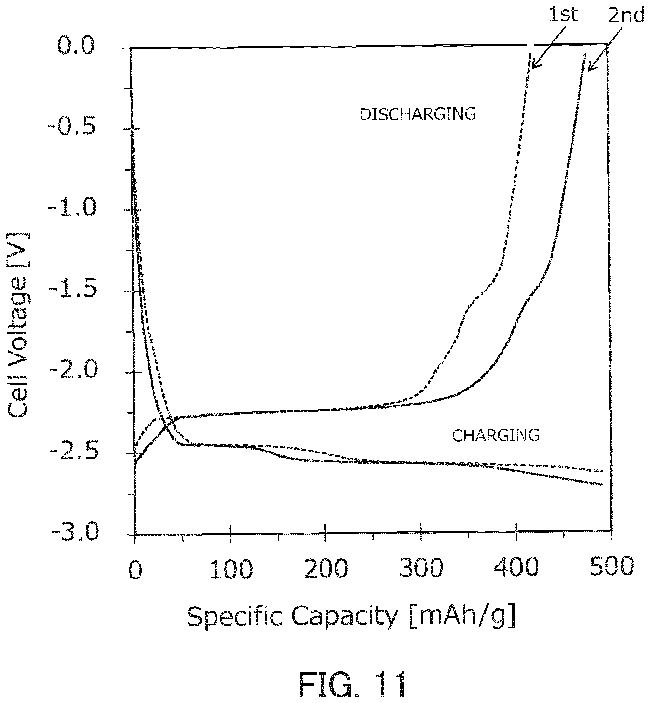

The charge-discharge evaluation of a fluoride shuttle secondary battery was performed with the evaluation cell of Example 2 in the same manner as in Example 1. FIG. 11 is a graph showing the results of the charge-discharge test of the evaluation cell of Example 2 at 140°C. An axis of abscissa represents a specific capacity, meaning the capacity of a negative electrode active material per unit mass, and indicates an electric quantity to be charged or discharged. The theoretical specific capacity of a negative electrode used in Example 2 was 447 mAh/g and the cell showed an excellent discharge capacity substantially equal to its theoretical value in the second cycle.

As can be seen from the results shown in FIG. 11, a satisfactory discharge capacity was able to be recognized even when KF was further incorporated as a negative electrode active material.

### [Example 3]

### (Production of Evaluation Cell)

An evaluation cell of Example 3 was produced in the same manner as in Example 1 except that in the production of the negative electrode mixture, GdF₃ (manufactured by Sigma-Aldrich Co. LLC) was used instead of LaF₃, that is, the mixture of the BCF and the AB, NaF, and GdF₃ were mixed in the mass ratio of BCF+AB:NaF:GdF₃=65:6:29.

### (Evaluation of Fluoride Shuttle Secondary Battery)

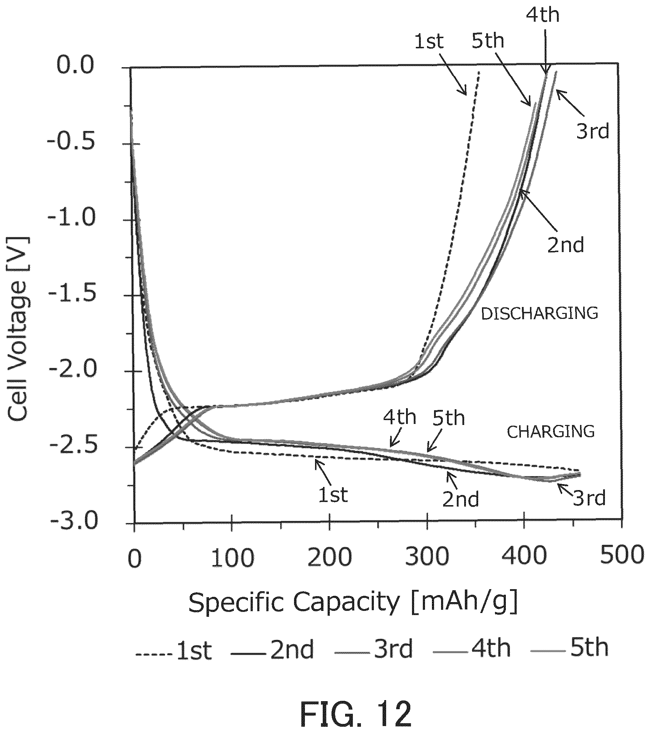

The charge-discharge evaluation of a fluoride shuttle secondary battery was performed with the evaluation cell of Example 3 in the same manner as in Example 1. FIG. 12 is a graph showing the results of the charge-discharge test of the evaluation cell of Example 3 at 140°C. An axis of abscissa represents a specific capacity, meaning the capacity of a negative electrode active material per unit mass, and indicates an electric quantity to be charged or discharged. The theoretical specific capacity of a negative electrode used in Example 3 is 418 mAh/g. In Example 3, in the second cycle and thereafter, the cell showed an excellent discharge capacity substantially equal to its theoretical value, and hence the capacity was free of deterioration and was stable.

### [Comparative Example 3]

### (Production of Evaluation Cell)

An evaluation cell of Comparative Example 3 was produced in the same manner as in Comparative Example 1 except that in the production of the negative electrode mixture, GdF₃ (manufactured by Sigma-Aldrich Co. LLC) was used instead of LaF₃, that is, the mixture of the BCF and the AB, and GdF₃ were mixed in the mass ratio of BCF+AB:GdF₃=65:35.

### (Evaluation of Fluoride Shuttle Secondary Battery)

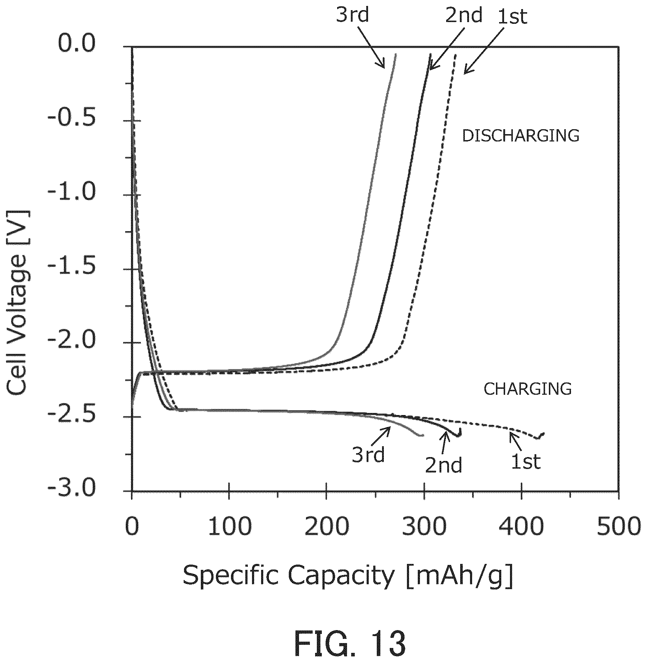

The charge-discharge evaluation of a fluoride shuttle secondary battery was performed with the evaluation cell of Comparative Example 3 in the same manner as in Example 1. FIG. 13 is a graph showing the results of the charge-discharge test of the evaluation cell of Comparative Example 3 at 140°C. An axis of abscissa represents a specific capacity, meaning the capacity of a negative electrode active material per unit mass, and indicates an electric quantity to be charged or discharged. Although the theoretical specific capacity of a negative electrode used in Comparative Example 3 was 375 mAh/g, the discharge capacity of Comparative Example 3 was lower than the theoretical specific capacity, and as the number of cycles increased, the capacity further reduced.

As can be seen from Example 3 and Comparative Example 3, even in the case where GdF₃ was incorporated as a negative electrode active material, as in the case where LaF₃ was incorporated, the addition of NaF increased the discharge capacity of the battery. In addition, an improvement in cycle characteristic thereof and that in utilization ratio of the negative electrode active material were able to be recognized.

### [Example 4]

### (Production of Evaluation Cell)

An evaluation cell of Example 4 was produced in the same manner as in Example 1 except that in the production of the negative electrode mixture, AlF₃ (manufactured by Sigma-Aldrich Co. LLC) was used instead of LaF₃, that is, the mixture of the BCF and the AB, NaF, and AlF₃ were mixed in the mass ratio of BCF+AB:NaF:AlF₃=65:6:29.

### (Evaluation of Fluoride Shuttle Secondary Battery)

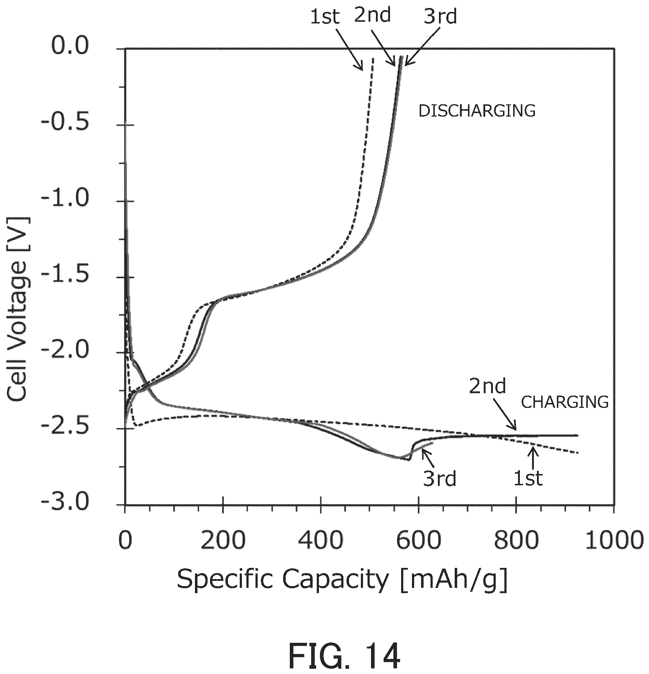

The charge-discharge evaluation of a fluoride shuttle secondary battery was performed with the evaluation cell of Example 4 in the same manner as in Example 1. FIG. 14 is a graph showing the results of the charge-discharge test of the evaluation cell of Example 4 at 140°C. An axis of abscissa represents a specific capacity, meaning the capacity of a negative electrode active material per unit mass, and indicates an electric quantity to be charged or discharged. In Example 4, in the second cycle and thereafter, the cell showed an excellent discharge capacity of about 600 mAh/g, and hence the capacity was free of deterioration and was stable. The theoretical specific capacity of a negative electrode used in Example 4 is 851 mAh/g.

### [Comparative Example 4]

### (Production of Evaluation Cell)

An evaluation cell of Comparative Example 4 was produced in the same manner as in Comparative Example 1 except that in the production of the negative electrode mixture, AlF₃ (manufactured by Sigma-Aldrich Co. LLC) was used instead of LaF₃, that is, the mixture of the BCF and the AB, and AlF₃ were mixed in the mass ratio of BCF+AB-AlF₃=65-35.

### (Evaluation of Fluoride Shuttle Secondary Battery)

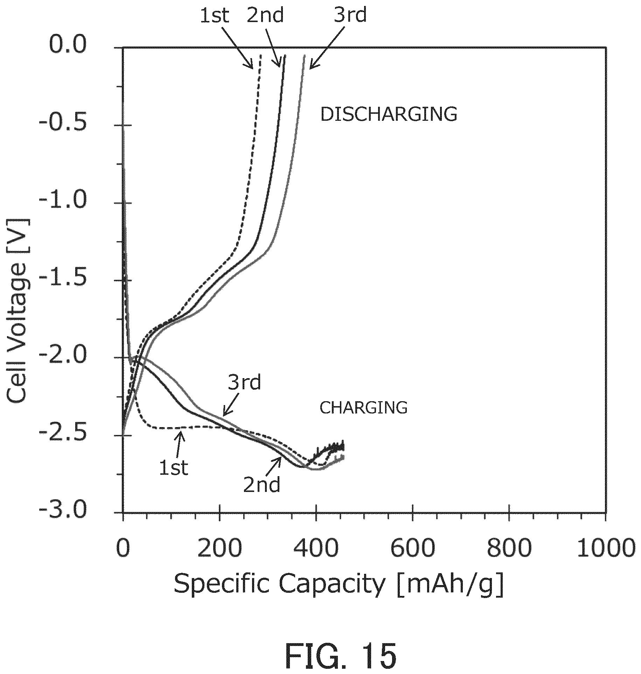

The charge-discharge evaluation of a fluoride shuttle secondary battery was performed with the evaluation cell of Comparative Example 4 in the same manner as in Example 1. FIG. 15 is a graph showing the results of the charge-discharge test of the evaluation cell of Comparative Example 4 at 140°C. Although the theoretical specific capacity of a negative electrode used in Comparative Example 4 was 957 mAh/g, the cell showed a discharge capacity of only about 400 mAh/g, and hence the discharge capacity was smaller than that of the battery of Example 4.

As can be seen from Example 4 and Comparative Example 4, even in the case where AlF₃ was incorporated as a negative electrode active material, as in the case where LaF₃ was incorporated, the addition of NaF increased the discharge capacity of the battery. In addition, an improvement in utilization ratio of the negative electrode active material was able to be recognized.

The fluoride shuttle secondary battery of the present disclosure is not limited to the above-mentioned respective embodiments, and may be modified or changed in various ways within the scope of the invention described in the scope of claims. For example, technical features described in the embodiments described in the section "DESCRIPTION OF EMBODIMENTS" may be appropriately replaced or combined for solving part or the entirety of the above-mentioned problems, or for achieving part or the entirety of the above-mentioned effects. In addition, the technical features may be appropriately omitted unless the features are described herein as essential features.

### Industrial Applicability

The fluoride shuttle secondary battery of the present disclosure is expected to be applied as a secondary battery increased in discharge capacity to various applications.

## Claims

1. A fluoride shuttle secondary battery, comprising:
a positive electrode;
a negative electrode; and
an electrolyte layer arranged between the positive electrode and the negative electrode,
wherein the fluoride shuttle secondary battery satisfies at least one selected from the group consisting of the following (A1) and (B1):
(A1) the negative electrode contains a first negative electrode active material and a second negative electrode active material having composition different from that of the first negative electrode active material,
the first negative electrode active material is a first metal fluoride containing a metal M1, and
the metal M1 has a melting point of 0°C or more and 250°C or less; and
(B1) the positive electrode contains a first positive electrode active material and a second positive electrode active material having composition different from that of the first positive electrode active material, and
the first positive electrode active material is a metal M2, which forms a metal fluoride represented by M2Fₓ and having a melting point of 0°C or more and 250°C or less,
where "x" represents a valence of the M2.

2. The fluoride shuttle secondary battery according to claim 1,
wherein when the (A1) is satisfied, the metal M1 is melted by charging, and
wherein when the (B1) is satisfied, the M2Fₓ is melted by the charging.

3. The fluoride shuttle secondary battery according to claim 1, wherein the (A1) is satisfied.

4. The fluoride shuttle secondary battery according to claim 1, wherein the metal M1 has a melting point of 25°C or more and 180°C or less.

5. The fluoride shuttle secondary battery according to claim 1, wherein the metal M1 contains Na.

6. The fluoride shuttle secondary battery according to claim 1, wherein the metal M1 contains Na and at least one selected from the group consisting of: K; Rb; and Li.

7. The fluoride shuttle secondary battery according to claim 1,
wherein the second negative electrode active material is a second metal fluoride, and
wherein a fluorination potential and a defluorination potential of the second metal fluoride are each more than -3.0 V (vs. Pb/PbF₂) and less than -1.0 V (vs. Pb/PbF₂).

8. The fluoride shuttle secondary battery according to claim 1,
wherein the second negative electrode active material is a second metal fluoride, and
wherein a difference in fluorination potential between the first metal fluoride and the second metal fluoride, and a difference in defluorination potential therebetween are each 0 V or more and 1.0 V or less.

9. The fluoride shuttle secondary battery according to claim 1, wherein the second negative electrode active material is at least one selected from the group consisting of: LaF₃; AlF₃; MgF₂; CeF₃; GdF₃; YF₃; EuF₃; SmF₃; NdF₃; and TiF₃.

10. The fluoride shuttle secondary battery according to claim 1,
wherein the metal M1 contains Na, and
wherein the second negative electrode active material is at least one selected from the group consisting of: LaF₃; AlF₃; MgF₂; CeF₃; GdF₃; YF₃; EuF₃; SmF₃; NdF₃; and TiF₃.

11. A method of using a fluoride shuttle secondary battery including:
a positive electrode;
a negative electrode; and
an electrolyte layer arranged between the positive electrode and the negative electrode,
wherein the usage method satisfies at least one selected from the group consisting of the following (A2) and (B2):
(A2) the negative electrode contains a first negative electrode active material and a second negative electrode active material having composition different from that of the first negative electrode active material,
the first negative electrode active material is a first metal fluoride containing a metal M1, and
the usage method comprises charging the fluoride shuttle secondary battery at a temperature equal to or more than a temperature at which the metal M1 is melted; and
(B2) the positive electrode contains a first positive electrode active material and a second positive electrode active material having composition different from that of the first positive electrode active material,
the first positive electrode active material is a metal M2, and
the usage method comprises charging the fluoride shuttle secondary battery at a temperature equal to or more than a temperature at which a fluoride represented by M2Fₓ is melted,
where "x" represents a valence of the M2.
